# EUROPEAN PATENT APPLICATION

(11) **EP 4 108 499 A2**
(43) Date of publication of application: **28.12.2022**
(21) Application number: 22180399.2
(22) Date of filing: 22.06.2022
(51) Int. Cl.: B60L 5/42, B60L 9/00, B60L 53/12, B60L 53/30, B60L 53/38, B60L 53/67, B60L 50/16, B60L 50/61, B60W 20/12, B60W 20/16, B60W 20/13

(54) **POWER SUPPLY SYSTEM, POWER SUPPLY METHOD, AND POWER SUPPLY APPARATUS**

(30) Priority: 22.06.2021 JP 2021103009
(71) Applicant: TOYOTA JIDOSHA KABUSHIKI KAISHA, Toyota-shi, Aichi-ken, 471-8571 (JP)
(72) Inventor: YOKOYAMA, Daiki, Toyota-shi, 471-8571 (JP); HASHIMOTO, Toshiya, Toyota-shi 471-8571 (JP)
(74) Representative: D Young & Co LLP

(57) **Abstract**

The power supply system (1, 1') includes a plurality of power supply apparatuses (2) installed at a road at surroundings of an area in which operation of internal combustion engines (30) is prohibited or restricted and configured so as to transmit power to vehicles (3) by non-contact. The plurality of power supply apparatuses (2) include a first power supply apparatus (2a) installed at a first point where a distance of a running route up to an entrance of the area or a straight route up to the entrance or a boundary of the area is equal to or less than a predetermined distance, and a second power supply apparatus (2b) installed at a second point where the distance is greater than the predetermined distance. An amount of power supply to a vehicle (3) from the first power supply apparatus (2a) is made greater than an amount of power supply to a vehicle (3) from the second power supply apparatus (2b).

## Description

### FIELD

The present invention relates to a power supply system, a power supply method, and a power supply apparatus.

### BACKGROUND

Known in the past has been the art of using a transmission method such as magnetic field resonance coupling to transmit power from a power supply apparatus provided on the ground surface to a vehicle by non-contact (for example, PTL 1). By using such art, it is possible to make a power supply apparatus charge a battery of a vehicle while the vehicle is running.

### [CITATION LIST]

### [PATENT LITERATURE]

[PTL 1] Japanese Unexamined Patent Publication No. 2018-157686

### SUMMARY

### [TECHNICAL PROBLEM]

In this regard, in recent years, in order to reduce air pollution, at locations such as urban areas with large amounts of traffic, an area where operation of internal combustion engines while the vehicles are running is prohibited or restricted (engine limited operation areas) has been set up. When hybrid vehicles run through a such area, they have to run in the EV mode where their engines are made to stop and only their motors are used to output drive power for running use.

However, if the state of charge of a battery becomes insufficient in an engine limited operation area, a need arises for operating an internal combustion engine for a hybrid vehicle to continue to run. For this reason, it is desirable to charge the battery of a hybrid vehicle in advance before the hybrid vehicle enters an engine limited operation area.

For example, it may be considered to install a power supply apparatus able to supply power to a vehicle by non-contact at a road at the surroundings of an engine limited operation area and charge a battery by non-contact power supply to a vehicle from the power supply apparatus. However, if supplying power by non-contact to a vehicle at the surroundings of an engine limited operation area without restriction, the amount of consumption of power for supplying power by non-contact would become excessive.

Therefore, in consideration of the above problem, an object of the present invention is to efficiently supply power by non-contact to a vehicle in the surroundings of an engine limited operation area from a power supply apparatus.

### [SOLUTION TO PROBLEM]

The summary of the present invention is as follows.
(1) A power supply system comprising a plurality of power supply apparatuses installed at a road at surroundings of an area in which operation of internal combustion engines is prohibited or restricted and configured so as to transmit power to vehicles by non-contact, wherein the plurality of power supply apparatuses include: a first power supply apparatus installed at a first point where a distance of a running route up to an entrance of the area or a straight route up to the entrance or a boundary of the area is equal to or less than a predetermined distance; and a second power supply apparatus installed at a second point where the distance is greater than the predetermined distance, and an amount of power supply to a vehicle from the first power supply apparatus is made greater than an amount of power supply to a vehicle from the second power supply apparatus.
(2) The power supply system described in above (1), wherein the plurality of power supply apparatuses include equal to or greater than three power supply apparatuses installed at mutually different points, and an amount of power supply to a vehicle from each of the plurality of power supply apparatuses is made greater the shorter the distance.
(3) The power supply system described in above (1) or (2), wherein the area is a limited time area where operation of internal combustion engines is prohibited or restricted in predetermined hours, and the first power supply apparatus makes an amount of power supply to a vehicle in a predetermined set time period including at least a part of the hours greater than an amount of power supply to a vehicle in a time period other than the set time period.
(4) The power supply system described in above (3), wherein a start point of the set time period is set to a point before the hours.
(5) The power supply system described in above (3) or (4), further comprising a server able to communicate with the first power supply apparatus, wherein the first power supply apparatus increases an amount of power supply to a vehicle based on an instruction from the server.
(6) The power supply system described in above (5), wherein the server acquires an amount of traffic of vehicles at the first point and transmits an instruction to increase an amount of power supply to a vehicle from the first power supply apparatus when a current time is within the set time period and the amount of traffic is equal to or greater than a predetermined value.
(7) A power supply method using a plurality of power supply apparatuses installed at a road at surroundings of an area in which operation of internal combustion engines is prohibited or restricted and configured so as to transmit power to vehicles by non-contact, wherein the plurality of power supply apparatuses include: a first power supply apparatus installed at a first point where a distance of a running route up to an entrance of the area or a straight route up to the entrance or a boundary of the area is equal to or less than a predetermined distance; and a second power supply apparatus installed at a second point where the distance is greater than the predetermined distance, and an amount of power supply to a vehicle from the first power supply apparatus is made greater than an amount of power supply to a vehicle from the second power supply apparatus.
(8) A power supply apparatus installed at surroundings of an area in which operation of internal combustion engines is prohibited or restricted in predetermined hours, wherein an amount of power supply to a vehicle in a predetermined set time period including at least a part of the hours is made greater than an amount of power supply to a vehicle in a time period other than the set time period.

### Advantageous Effects of Invention

According to the present invention, it is possible to efficiently supply power by non-contact to a vehicle in the surroundings of an engine limited operation area from a power supply apparatus.

### BRIEF DESCRIPTION OF DRAWINGS

FIG. 1 is a view schematically showing a configuration for non-contact power supply to a vehicle from a power supply apparatus.
FIG. 2 is a schematic view of a configuration of a controller.
FIG. 3 is a view showing a schematic configuration of an ECU and other vehicle-mounted equipment.
FIG. 4 is a view schematically showing a power supply system according to a first embodiment.
FIG. 5 is a view showing the relationship between a distance of a running route up to an entrance of an engine limited operation area and an amount of power supply per unit time to a vehicle from the power supply apparatus, regarding power supply apparatuses installed at the surroundings of an engine limited operation area.
FIG. 6 is a view schematically showing a power supply system according to a second embodiment.
FIG. 7 is a view schematically showing a configuration of a server.
FIG. 8 is a flow chart showing a control routine performed in the server in a second embodiment.
FIG. 9 is a flow chart showing a control routine performed in a first power supply apparatus in a second embodiment.
FIG. 10 is a flow chart showing a control routine performed in the server in a third embodiment.

### DESCRIPTION OF EMBODIMENTS

Below, referring to the drawings, embodiments of the present invention will be explained. Note that, in the following explanation, similar component elements will be assigned the same reference notations.

### <First Embodiment>

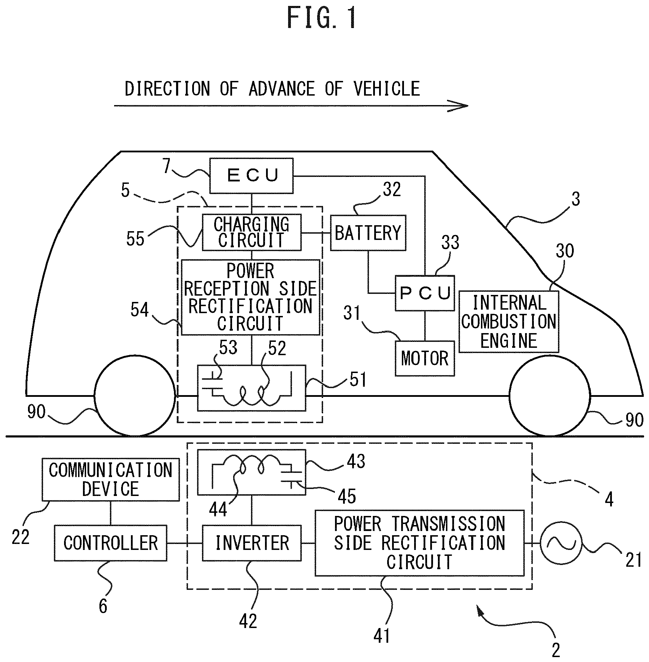

First, referring to FIG. 1 to FIG. 5, a first embodiment of the present invention will be explained.

In recent years, in order to reduce air pollution, at locations such as urban areas with large amounts of traffic, an area where operation of internal combustion engines when vehicles are running is prohibited or restricted (engine limited operation areas) has been set up. When hybrid vehicles run through a such area, they have to run in the EV mode where their engines are made to stop and only their motors are used to output drive power for running use.

However, if the state of charge (SOC) of a battery becomes insufficient in an engine limited operation area, a need arises for operating an internal combustion engine for a hybrid vehicle to continue to run. For this reason, it is desirable to charge the battery of a hybrid vehicle in advance before the hybrid vehicle enters an engine limited operation area.

For example, it may be considered to install a power supply apparatus able to supply power to a vehicle by non-contact at a road at the surroundings of an engine limited operation area and charge a battery by non-contact power supply while the vehicles are running. Below, one example of the configuration for non-contact power supply will be explained.

FIG. 1 is a view schematically showing the configuration for performing non-contact power supply from a power supply apparatus 2 to a vehicle 3. The power supply apparatus 2 is provided at a road. When the vehicle 3 is passing over that road, non-contact power supply is performed from the power supply apparatus 2 to the vehicle 3. That is, the power supply apparatus 2 is configured to transmit power to the vehicle 3 by non-contact, while the vehicle 3 is configured to be supplied with power by non-contact from the power supply apparatus 2. Specifically, the power supply apparatus 2 is provided with a power transmission apparatus 4 configured so as to transmit power by non-contact, while the vehicle 3 is provided with a power reception apparatus 5 configured to receive power by non-contact from the power transmission apparatus 4.

In particular, in the present embodiment, non-contact power supply from the power supply apparatus 2 to the vehicle 3 is performed by magnetic field resonance coupling (magnetic field resonance). That is, the power supply apparatus 2 transmits power to the vehicle 3 using a magnetic field as a medium. Note that, non-contact power supply is also referred to as non-contact power transfer, wireless power transfer, or wireless power supply.

As shown in FIG. 1, the power supply apparatus 2 is provided with, in addition to the power transmission apparatus 4, a power supply 21, a controller 6, and a communication device 22. The power supply apparatus 2 is provided at a road (lane) over which the vehicle 3 will pass, for example, is buried in the ground (under the road surface). Note that, at least a part of the power supply apparatus 2 (for example, the power supply 21, the controller 6, and the communication device 22) may be arranged on the road surface.

The power supply 21 is the power source of the power transmission apparatus 4 and supplies power to the power transmission apparatus 4. The power supply 21, for example, is a commercial alternating current power supply supplying single-phase alternating current power. Note that, the power supply 21 may also be an alternating current power supply supplying three-phase alternating current power etc.

The power transmission apparatus 4 is provided with a power transmission side rectification circuit 41, inverter 42, and power transmission side resonance circuit 43. In the power transmission apparatus 4, suitable alternating current power (high frequency power) is supplied through the power transmission side rectification circuit 41 and the inverter 42 to the power transmission side resonance circuit 43.

The power transmission side rectification circuit 41 is electrically connected to the power supply 21 and the inverter 42. The power transmission side rectification circuit 41 rectifies the alternating current power supplied from the power supply 21 to direct current power and supplies the direct current power to the inverter 42. The power transmission side rectification circuit 41 is, for example, an AC/DC converter.

The inverter 42 is electrically connected to the power transmission side rectification circuit 41 and power transmission side resonance circuit 43. The inverter 42 converts the direct current power supplied from the power transmission side rectification circuit 41 to alternating current power of a frequency higher than the alternating current power of the power supply 21 (high frequency power) and supplies the high frequency power to the power transmission side resonance circuit 43.

The power transmission side resonance circuit 43 has a resonator comprised of a coil 44 and capacitor 45. The various parameters of the coil 44 and capacitor 45 (outside diameter and inside diameter of the coil 44, turns of the coil 44, electrostatic capacity of the capacitor 45, etc.) are determined so that the resonance frequency of the power transmission side resonance circuit 43 becomes a predetermined set value. The predetermined set value is, for example, 10 kHz to 100 GHz, preferably is the 85 kHz determined by the SAE TIR J2954 standard as the frequency band for non-contact power supply of vehicles.

The power transmission side resonance circuit 43 is arranged at the center of the lane over which the vehicle 3 passes so that the center of the coil 44 is positioned at the center of the lane. If high frequency power supplied from the inverter 42 is applied to the power transmission side resonance circuit 43, the power transmission side resonance circuit 43 generates an alternating current magnetic field for transmitting the power. Note that, the power supply 21 may be a fuel cell or solar cell or other such direct current power supply. In this case, the power transmission side rectification circuit 41 may be omitted.

The controller 6 is, for example, a general use computer and performs various control of the power supply apparatus 2. For example, the controller 6 is electrically connected to the inverter 42 of the power transmission apparatus 4 and controls the inverter 42 so as to control the power transmission by the power transmission apparatus 4.

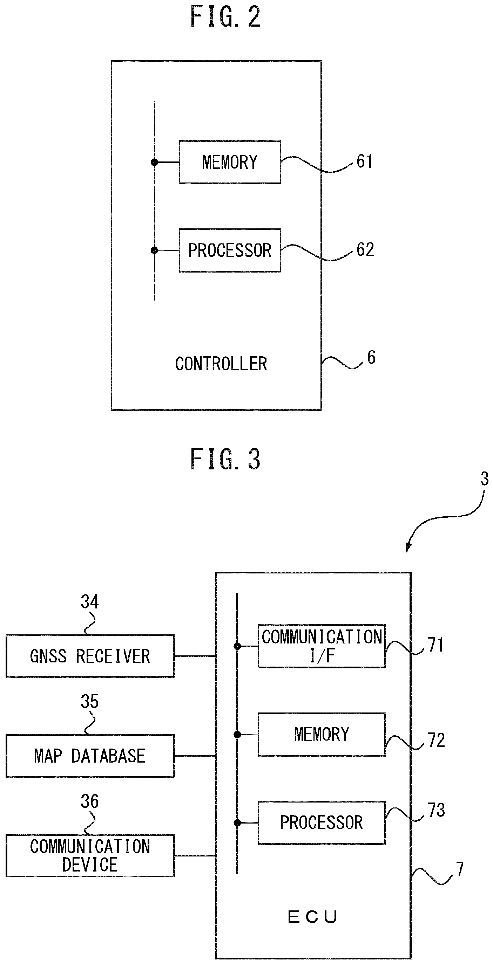

FIG. 2 is a schematic view of the configuration of the controller 6. The controller 6 is provided with a memory 61 and a processor 62. The memory 61 and the processor 62 are connected with each other through signal wires. Note that, the controller 6 may be further provided with a communication interface etc. for connecting the controller 6 to a communication network such as the Internet.

The memory 61 has, for example, a volatile semiconductor memory (for example, a RAM) and a nonvolatile semiconductor memory (for example, a ROM). The memory 61 stores programs to be run at the processor 62, various data used when various processing is performed by the processor 62, etc.

The processor 62 has one or more CPUs (central processing units) and their peripheral circuits and performs various processing. Note that, the processor 62 may also have a logic unit or arithmetic unit or other such processing circuit. The processor 62 is one example of a control part of the power supply apparatus 2.

The communication device 22 is equipment enabling communication between the power supply apparatus 2 and the outside of the power supply apparatus 2 (for example, a near field wireless communication module). The communication device 22 is electrically connected to the controller 6. The controller 6 communicates with the vehicle 3 through the communication device 22.

On the other hand, the vehicle 3, as shown in FIG. 1, is provided with, in addition to the power reception apparatus 5, an internal combustion engine 30, a motor 31, battery 32, power control unit (PCU) 33, and electronic control unit (ECU) 7. In the present embodiment, the vehicle 3 is a hybrid vehicle (HEV) and outputs drive power for running use by at least one of the internal combustion engine 30 and motor 31.

The internal combustion engine 30 burns a mixture of fuel and air in its cylinders to output power and, for example, is a gasoline engine or a diesel engine. The output of the internal combustion engine 30 is transmitted through a decelerator and an axle to the wheels 90.

The motor 31 is, for example, an alternating current synchronous motor and functions as a motor and a generator. When the motor 31 functions as a motor, the power stored in the battery 32 is used as the source of power for driving it. The output of the motor 31 is transmitted through a decelerator and axle to the wheels 90. On the other hand, at the time of deceleration of the vehicle 3, the motor 31 is driven by rotation of the wheels 90 and the motor 31 functions as a generator to produce regenerated power.

The battery 32 is a rechargeable secondary battery and is, for example, comprised of a lithium ion battery, nickel-hydrogen battery, etc. The battery 32 stores the power required for the vehicle 3 to run (for example, drive power of motor 31). If the regenerated power produced by the motor 31 is supplied to the battery 32, the battery 32 is charged and the state of charge of the battery 32 is restored.

The PCU 33 is electrically connected to the battery 32 and motor 31. The PCU 33 has an inverter, booster converter, and DC/DC converter. The inverter converts the direct current power supplied from the battery 32 to alternating current power and supplies the alternating current power to the motor 31. On the other hand, the inverter converts the alternating current power generated by the motor 31 (regenerated power) to direct current power and supplies the direct current power to the battery 32. When the power stored in the battery 32 is supplied to the motor 31, the booster converter boosts the voltage of the battery 32 in accordance with need. When the power stored in the battery 32 is supplied to the headlights and other electronic equipment, the DC/DC converter lowers the voltage of the battery 32.

The power reception apparatus 5 is provided with a power reception side resonance circuit 51, power reception side rectification circuit 54, and charging circuit 55. The power reception apparatus 5 receives power from the power transmission apparatus 4 and supplies the received power to the battery 32.

The power reception side resonance circuit 51 is arranged at the bottom part of the vehicle 3 so that the distance from the road surface becomes smaller. In the present embodiment, the power reception side resonance circuit 51 is arranged at the center of the vehicle 3 in the vehicle width direction and is arranged between the front wheels 90 and the rear wheels 90 in the front-back direction of the vehicle 3.

The power reception side resonance circuit 51 has a configuration similar to the power transmission side resonance circuit 43 and has a resonator comprised of a coil 52 and capacitor 53. The various parameters of the coil 52 and capacitor 53 (outside diameter and inside diameter of the coil 52, turns of the coil 52, electrostatic capacity of the capacitor 53, etc.) are determined so that the resonance frequency of the power reception side resonance circuit 51 matches the resonance frequency of the power transmission side resonance circuit 43. Note that, if the amount of deviation of the resonance frequency of the power reception side resonance circuit 51 and the resonance frequency of the power transmission side resonance circuit 43 is small, for example, the resonance frequency of the power reception side resonance circuit 51 is within a range of ±20% of the resonance frequency of the power transmission side resonance circuit 43, the resonance frequency of the power reception side resonance circuit 51 does not necessarily have to match the resonance frequency of the power transmission side resonance circuit 43.

As shown in FIG. 1, when the power reception side resonance circuit 51 faces the power transmission side resonance circuit 43, if an alternating current magnetic field is generated at the power transmission side resonance circuit 43, the vibration of the alternating current magnetic field is transferred to the power reception side resonance circuit 51 which resonates by the same resonance frequency of the power transmission side resonance circuit 43. As a result, due to electromagnetic induction, an induction current flows to the power reception side resonance circuit 51, and due to the induction current, power is generated at the power reception side resonance circuit 51. That is, the power transmission side resonance circuit 43 transmits power to the power reception side resonance circuit 51 through a magnetic field, and the power reception side resonance circuit 51 receives power from the power transmission side resonance circuit 43 through a magnetic field.

The power reception side rectification circuit 54 is electrically connected to the power reception side resonance circuit 51 and the charging circuit 55. The power reception side rectification circuit 54 rectifies the alternating current power supplied from the power reception side resonance circuit 51 to convert it to direct current power and supplies the direct current power to the charging circuit 55. The power reception side rectification circuit 54 is, for example, an AC/DC converter.

The charging circuit 55 is electrically connected to the power reception side rectification circuit 54 and the battery 32. The charging circuit 55 converts the direct current power supplied from the power reception side rectification circuit 54 to the voltage level of the battery 32 and supplies it to the battery 32. If the power transmitted from the power transmission apparatus 4 is supplied by the power reception apparatus 5 to the battery 32, the battery 32 is charged and the SOC of the battery 32 is restored. The charging circuit 55 is, for example, a DC/DC converter.

The ECU 7 performs various types of control of the vehicle 3. For example, the ECU 7 is electrically connected to the charging circuit 55 of the power reception apparatus 5 and controls the charging circuit 55 to control charging of the battery 32 by the power transmitted from the power transmission apparatus 4. Further, the ECU 7 is electrically connected to the PCU 33 and controls the PCU 33 to control the transmission of power between the battery 32 and an electrical load (for example, the motor 31). Note that, the power reception apparatus 5 may supply the power received from the power transmission apparatus 4 to an electrical load (for example, the motor 31) instead of the battery 32.

FIG. 3 is a view showing a schematic configuration of the ECU 7 and other vehicle-mounted equipment. The ECU 7 has a communication interface 71, a memory 72, and a processor 73. The communication interface 71, the memory 72, and the processor 73 are connected together through signal wires.

The communication interface 71 has an interface circuit for connecting the ECU 7 to an internal vehicle network based on the CAN (Controller Area Network) or other standard.

The memory 72, for example, has a volatile semiconductor memory (for example, RAM) and nonvolatile semiconductor memory (for example, ROM). The memory 72 stores programs to be run at the processor 73, various data used when various processing is performed by the processor 73, etc.

The processor 73 has one or more CPUs (central processing units) and their peripheral circuits and performs various processing. Note that, the processor 73 may also have a logic unit or arithmetic unit or other such processing circuit.

Further, as shown in FIG. 3, the vehicle 3 is further provided with a GNSS receiver 34, map database 35, and communication device 36. The GNSS receiver 34, map database 35, and communication device 36 are electrically connected to the ECU 7.

The GNSS receiver 34 detects the current position of the vehicle 3 (for example, a latitude and longitude of the vehicle 3) based on position measurement information obtained from a plurality of (for example, three or more) positioning satellites. Specifically, the GNSS receiver 34 captures a plurality of positioning satellites and receives signals emitted from the positioning satellites. Further, the GNSS receiver 34 calculates the distances to the positioning satellites based on the difference between the times of emission and times of reception of the signals and detects the current position of the vehicle 3 based on the distances to the positioning satellites and the positions of the positioning satellites (orbital information). The output of the GNSS receiver 34, that is, the current position of the vehicle 3 detected by the GNSS receiver 34, is sent to the ECU 7.

Note that, "GNSS" (Global Navigation Satellite System) is a general name of the GPS of the U.S., GLONASS of Russia, Galileo of Europe, QZSS of Japan, BeiDou of China, IRNSS of India, and other satellite positioning systems. Therefore, the GNSS receiver 34 includes a GPS receiver.

The map database 35 stores map information. The map information includes position information of the power supply apparatuses 2, position information of the engine limited operation area, etc. The ECU 7 acquires map information from the map database 35. Note that, the map database 35 may be provided outside of the vehicle 3 (for example, the server etc.), and the ECU 7 may acquire map information from outside the vehicle 3.

The communication device 36 is equipment enabling communication between the vehicle 3 and the outside of the vehicle 3 (for example, near field wireless communication module, a data communication module (DCM) for connecting the vehicle 3 to a communication network such as the Internet, etc.) The ECU 7 communicates with the power supply apparatus 2 through the communication device 36.

For example, when the vehicle 3 approaches a power supply area in which a power supply apparatus 2 is installed, the ECU 7 requests the power supply apparatus 2 to supply power by non-contact. If the controller 6 of the power supply apparatus 2 receives a request for non-contact power supply from the vehicle 3, it generates an alternating current magnetic field by the power transmission apparatus 4. As a result, power is supplied by noncontact from the power supply apparatus 2 to the vehicle 3.

Therefore, by installing the power supply apparatus 2 at a road at the surroundings of an engine limited operation area, when a hybrid vehicle such as the vehicle 3 enters the engine limited operation area, it is possible to charge the battery 32 of the vehicle 3 in advance. However, if supplying power by non-contact to vehicles at the surroundings of an engine limited operation area without restriction, the amount of consumption of power for non-contact power supply would become excessive. Therefore, in the present embodiment, the amount of power supply to a vehicle from the power supply apparatus 2 is determined considering the installation position of the power supply apparatus 2.

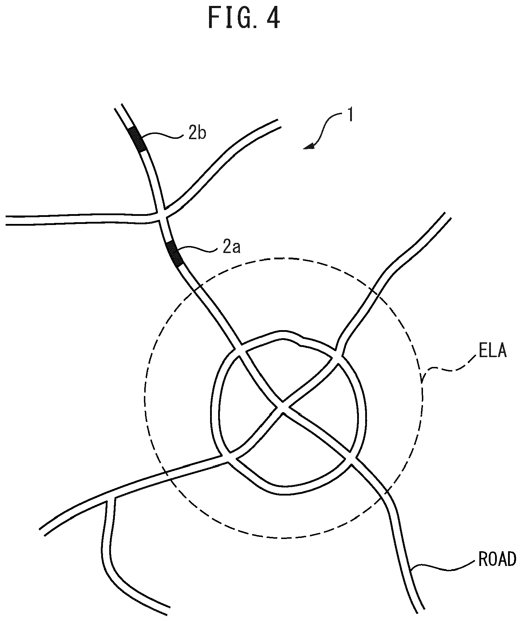

FIG. 4 is view schematically showing a power supply system 1 according to a first embodiment. The broken line of FIG. 4 shows the boundary of an engine limited operation area ELA. The range surrounded by the broken line corresponds to the engine limited operation area ELA. In the example of FIG. 4, the plurality of roads in the surroundings of the engine limited operation area ELA are connected to roads inside the engine limited operation area ELA. Note that, an engine limited operation area ELA is also referred to as a low emission zone (LEZ), E drive zone, geofencing zone, etc.

The power supply system 1 is provided with a plurality of power supply apparatuses installed at the surroundings of the engine limited operation area ELA and configured so as to transmit power to vehicles by non-contact. In the present embodiment, the plurality of power supply apparatuses include a first power supply apparatus 2a installed at a first point where a distance of a running route up to an entrance of the engine limited operation area ELA is equal to or less than a predetermined distance and a second power supply apparatus 2b installed at a second point where the distance of a running route up to an entrance of the engine limited operation area ELA is greater than the predetermined distance. Note that, the "distance of a running route" means the running distance of a vehicle when the vehicle is running along a road. Further, an "entrance of the engine limited operation area" means a boundary point of an engine limited operation area when a vehicle enters an engine limited operation area along a road.

The first power supply apparatus 2a and the second power supply apparatus 2b respectively have configurations similar to the above-mentioned power supply apparatus 2. The first power supply apparatus 2a is installed at a road enabling entry into an engine limited operation area ELA by running straight, i.e., a road leading to an engine limited operation area. In the example of FIG. 4, the first power supply apparatus 2a and the second power supply apparatus 2b are installed at the same road, and there is a branch road between the first power supply apparatus 2a and the second power supply apparatus 2b.

The first point where the first power supply apparatus 2a is installed is closer to the engine limited operation area ELA than the second point where the second power supply apparatus 2b is installed. For this reason, a vehicle passing through the first point has a higher possibility of entry into the engine limited operation area ELA than a vehicle passing through the second point. Therefore, if the amount of power able to be used at the surroundings of the engine limited operation area ELA is limited, it is desirable to supply power to a vehicle passing the first point with priority over a vehicle passing the second point.

Therefore, in the present embodiment, the amount of power supply to a vehicle from the first power supply apparatus 2a installed at the first point is made greater than the amount of power supply to a vehicle from the second power supply apparatus 2b installed at the second point. By doing this, it is possible to reduce the amount of power consumption for power supply at the surroundings of an engine limited operation area ELA while keeping power of a vehicle from running out inside the engine limited operation area ELA. Therefore, according to the present embodiment, it is possible to efficiently supply power by non-contact to a vehicle from a power supply apparatus at the surroundings of an engine limited operation area.

For example, the first power supply apparatus 2a and the second power supply apparatus 2b are configured so that the amount of power supply per unit time to a vehicle from the first power supply apparatus 2a becomes greater than the amount of power supply per unit time to a vehicle from the second power supply apparatus 2b. Further, the first power supply apparatus 2a and the second power supply apparatus 2b may be configured so that the amount of power supply per unit time to a vehicle from the first power supply apparatus 2a when a vehicle passes the first power supply apparatus 2a by a predetermined speed becomes greater than the amount of power supply per unit time to a vehicle from the second power supply apparatus 2b when a vehicle passes the second power supply apparatus 2b by the predetermined speed.

The amount of power supply to a vehicle from the power supply apparatus 2a or 2b is, for example, adjusted by changing at least one of the strength and generation range of the alternating current magnetic field emitted from the power transmission apparatus 4. The higher the strength of the alternating current magnetic field, the greater the amount of power supply to a vehicle, while the broader the generation range of the alternating current magnetic field, the greater the amount of power supply to a vehicle. The strength of the alternating current magnetic field changes according to the physical parameters of the power transmission side resonance circuit 43 (for example, the turns of the coil 44 etc.), the value of voltage of the alternating current power supplied to the power transmission side resonance circuit 43, etc., while the range of generation of the alternating current magnetic field changes according to the installation range of the coil 44 of the power transmission side resonance circuit 43 etc.

Note that, the first point where the first power supply apparatus 2a is installed may be a point where a distance of a straight route up to an entrance of the engine limited operation area ELA or a straight route up to a boundary of the engine limited operation area ELA is equal to or less than a predetermined distance, while the second point where the second power supply apparatus 2b is installed may be a point where the above distance is greater than the predetermined distance. A "distance of a straight route up to an entrance of the engine limited operation area ELA" means a distance of a route connecting by a straight line a point covered (first point or second point) and an entrance of the engine limited operation area ELA closest from the point covered. A "distance of a straight route up to a boundary of the engine limited operation area ELA" means a distance of a route connecting by a straight line a targeted point (first point or second point) and a boundary of the engine limited operation area ELA closest from the targeted point.

Further, the power supply system 1 may be provided with a plurality of first power supply apparatuses installed at a plurality of first points where a distance of a running route up to an entrance of the engine limited operation area ELA or a straight route up to an entrance or a boundary of the engine limited operation area ELA is equal to or less than a predetermined distance, and a plurality of second power supply apparatuses installed at a plurality of second points where the above distance is greater than the predetermined distance. In this case, the amount of power supply to a vehicle from each of the plurality of first power supply apparatuses is made greater than the amount of power supply to a vehicle from each of the plurality of second power supply apparatuses.

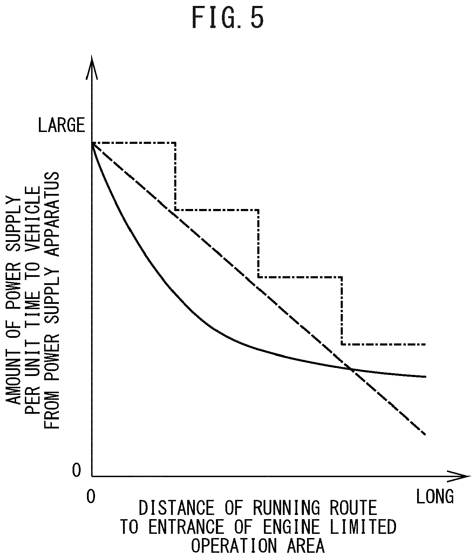

Further, the power supply system 1 may be provided with equal to or greater than three power supply apparatuses 2 installed at mutually different points, and an amount of power supply to a vehicle from each of the plurality of power supply apparatuses 2 may be made greater the shorter the distance of the running route up to an entrance of the engine limited operation area ELA or the straight route up to an entrance or a boundary of the engine limited operation area ELA. FIG. 5 is a view showing the relationship between a distance of a running route up to an entrance of an engine limited operation area ELA and an amount of power supply per unit time to a vehicle from the power supply apparatus 2, regarding power supply apparatuses 2 installed at the surroundings of an engine limited operation area ELA. For example, as shown in FIG. 5, as the distance of the running route becomes shorter, i.e., as the installation position of the power supply apparatus 2 becomes closer to the engine limited operation area ELA, the amount of power supply to a vehicle is made greater exponentially (solid line), linearly (broken line), or in stages (one-dot chain line). Note that, the relationship between the distance of the straight route up to an entrance or a boundary of the engine limited operation area ELA and the amount of power supply per unit time to a vehicle from the power supply apparatus 2 is similarly set.

### <Second Embodiment>

The power supply system according to a second embodiment is basically similar to the power supply system according to the first embodiment except for the points explained below. For this reason, below, the second embodiment of the present invention will be explained focusing on parts different from the first embodiment.

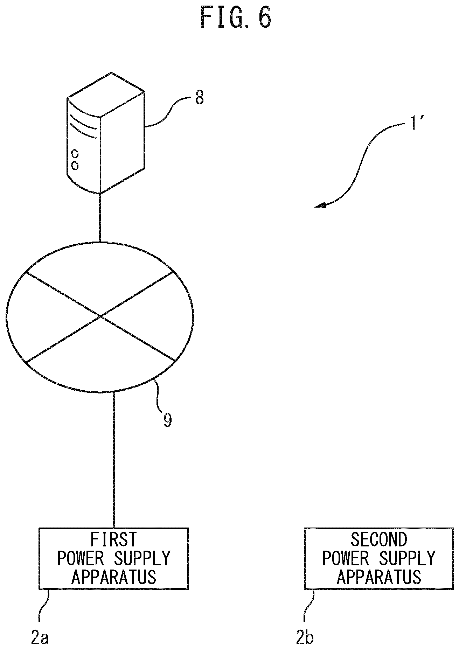

FIG. 6 is view schematically showing the power supply system 1' according to the second embodiment. The power supply system 1' is provided with a plurality of power supply apparatuses and a server 8. In the same way as the first embodiment, the plurality of power supply apparatuses comprise a first power supply apparatus 2a installed at a first point where a distance of running route up to the entrance of the engine limited operation area ELA or a straight route up to the entrance or boundary of the engine limited operation area ELA is equal to or less than a predetermined distance and a second power supply apparatus 2b installed at a second point where that distance is greater than the predetermined distance. The controller 6 of the first power supply apparatus 2a has a communication interface for connecting the first power supply apparatus 2a to the communication network 9. That is, the first power supply apparatus 2a can communicate with the outside of the first power supply apparatus 2a through the communication network 9.

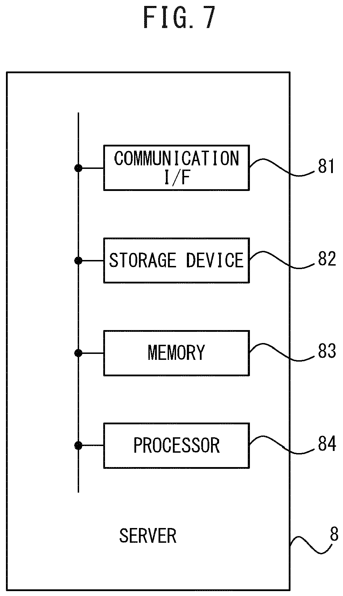

FIG. 7 is a view schematically showing the configuration of the server 8. The server 8 is provided with a communication interface 81, a storage device 82, a memory 83, and a processor 84. The communication interface 81, the storage device 82, and the memory 83 are connected to the processor 84 through signal wires. Note that, the server 8 may be further provided with a keyboard and a mouse or other such input devices, a display or other such output device, etc. Further, the server 8 may be configured by a plurality of computers.

The communication interface 81 has an interface circuit for connecting the server 8 to the communication network 9 and enables communication between the server 8 and the outside of the server 8. For example, the server 8 can communicate with the first power supply apparatus 2a through the communication network 9. The communication interface 81 is one example of a communicating part of the server 8.

The storage device 82, for example, has a hard disk drive (HDD), a solid state drive (SSD), or an optical recording medium and their access devices. The storage device 82 stores various data, for example, stores information relating to the engine limited operation area ELA, information relating to the first power supply apparatus 2a, a computer program for the processor 84 to perform various processing, etc. The storage device 82 is one example of a storage part of the server 8.

The memory 83 is a nonvolatile semiconductor memory (for example, RAM). The memory 83, for example, temporarily stores various data etc. used when various processing is performed by the processor 84. The memory 83 is one example of a storage part of the server 8.

The processor 84 has one or more CPUs and their peripheral circuits and performs various processing. Note that, the processor 84 may further have a logic unit, an arithmetic unit, or a graphic unit or other such processing circuit. The processor 84 is one example of a control part of the server 8.

In the second embodiment, the engine limited operation area ELA is set as a limited time area where operation of internal combustion engines is prohibited or restricted in predetermined hours. For example, in an engine limited operation area ELA, operation of internal combustion engines is prohibited or restricted in the hours of 6:00 to 10:00 in each day and operation of internal combustion engines is allowed in other hours. Note that, predetermined hours may be changed in accordance with the day, date, etc.

When the engine limited operation area ELA is a limited time area, it is necessary to keep power of a vehicle from running out in the engine limited operation area ELA in predetermined hours. Therefore, in the second embodiment, the first power supply apparatus 2a makes the amount of power supply to a vehicle in a predetermined set time period including at least a part of the predetermined hours when operation of internal combustion engines is prohibited or restricted greater than the amount of power supply to a vehicle in a time period other than the set time period. By doing this, it is possible to reduce the amount of power consumed for supplying power at the surroundings of the engine limited operation area ELA while keeping power of the vehicle from running out in the engine limited operation area ELA in predetermined hours.

For example, a start point of the set time period is set to a point before the predetermined hours where operation of internal combustion engines is prohibited or restricted. By doing this, it is possible to keep the state of charge of a battery from already falling when the predetermined hours are started. Therefore, it is possible to more effectively keep power of a vehicle from running out in the engine limited operation area ELA in predetermined hours. On the other hand, an end point of the set time period is set to an end point of the predetermined hours where operation of internal combustion engines is prohibited or restricted.

Note that, the amount of power supply to a vehicle from the second power supply apparatus 2b is made smaller than the amount of power supply to a vehicle from the first power supply apparatus 2a at the set time period, for example, is made the same as the amount of power supply to a vehicle from the first power supply apparatus 2a in a time period other than the set time period.

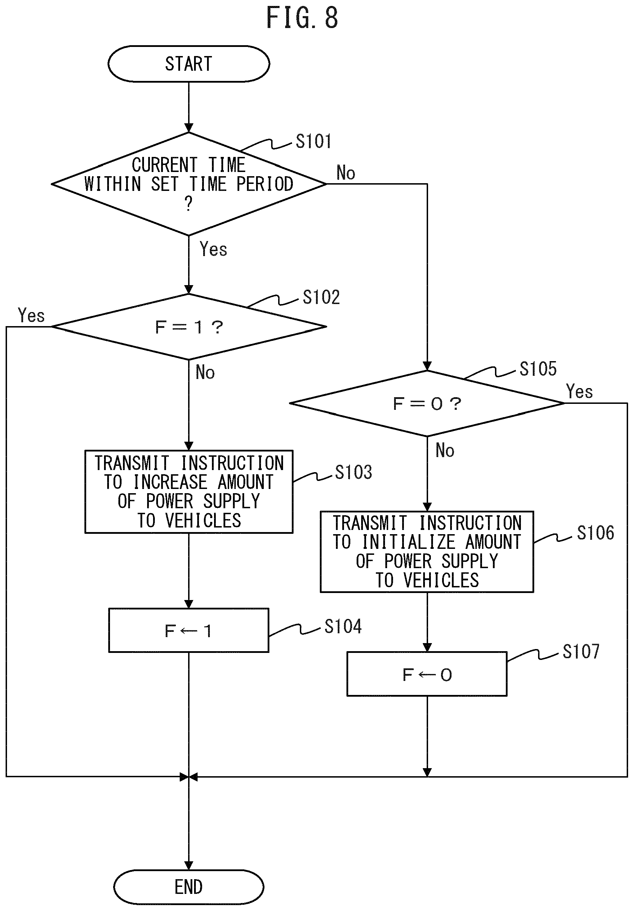

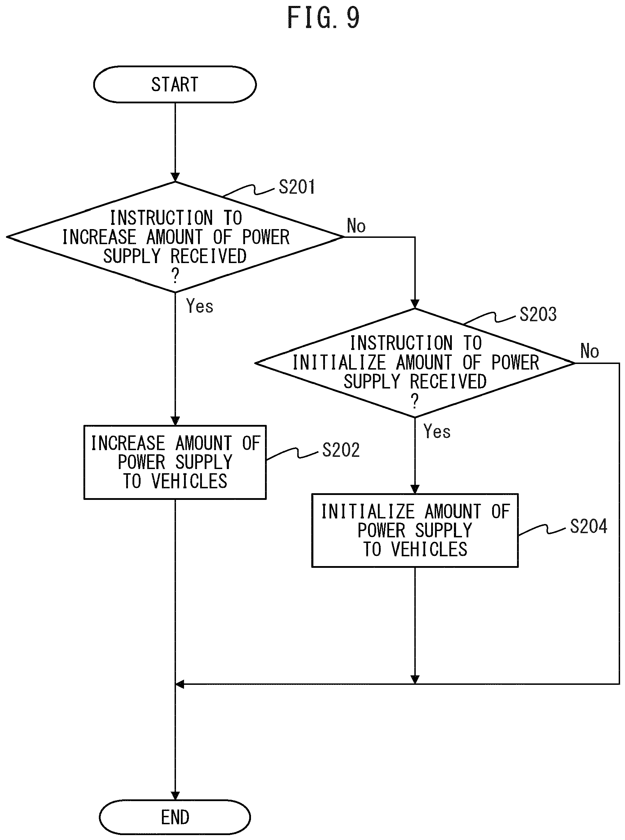

In the second embodiment, the first power supply apparatus 2a makes the amount of power supply to a vehicle at the predetermined set time period greater than the amount of power supply to a vehicle in a time period other than the set time period based on an instruction from the server 8. Below, referring to the flow charts of FIG. 8 and FIG. 9, the flow of such control will be explained.

FIG. 8 is a flow chart showing a control routine performed at the server 8 in the second embodiment. The present control routine is repeatedly performed at predetermined intervals by the processor 84 of the server 8.

First, at step S101, the processor 84 judges whether a current time is within a set time period. The current time is, for example, acquired from a digital clock provided in the server 8. Note that, the current time may be acquired from outside of the server 8 through the communication network 9. The set time period is set in advance in accordance with the hours in which operation of internal combustion engines is prohibited or restricted in an engine limited operation area ELA and is stored in the storage device 82 of the server 8 etc. Note that, if the hours in which operation of internal combustion engines is prohibited or restricted in an engine limited operation area ELA are changed, the set time period is reset by the operator of the server 8 etc. in accordance with the content of the change.

If at step S101 it is judged that the current time is within a set time period, the present control routine proceeds to step S102. At step S102, the processor 84 judges whether a power supply flag F is "1". The power supply flag F is set to "1" when an instruction to increase the amount of power supply to a vehicle is transmitted to the first power supply apparatus 2a and is set to zero when an instruction to initialize the amount of power supply to a vehicle is transmitted to the first power supply apparatus 2a. Note that, the initial value of the power supply flag F is zero.

If at step S102 it is judged that the power supply flag F is zero, the present control routine proceeds to step S103. At step S103, the processor 84 transmits an instruction to increase the amount of power supply to a vehicle to the first power supply apparatus 2a through the communication network 9. Next, at step S104, the processor 84 sets the power supply flag F to "1". After step S104, the present control routine ends. On the other hand, if at step S102 it is judged that the power supply flag F is "1", since an instruction to increase the amount of power supply to a vehicle has already been transmitted, the present control routine skips steps S103 and S104 and ends.

Further, if at step S101 it is judged that the current time is other than the set time period, the present control routine proceeds to step S105. At step S105, the processor 84 judges whether the power supply flag F is zero. If it is judged that the power supply flag F is "1", the present control routine proceeds to step S106.

At step S106, the processor 84 transmits an instruction to initialize the amount of power supply to a vehicle to the first power supply apparatus 2a through the communication network 9. Next, at step S107, the processor 84 sets the power supply flag F to zero. After step S107, the present control routine ends. On the other hand, if at step S105 it is judged that the power supply flag F is zero, since an instruction to initialize the amount of power supply to a vehicle has already been transmitted, the present control routine skips steps S106 and S107 and ends.

FIG. 9 is a flow chart showing a control routine performed at the first power supply apparatus 2a in the second embodiment. The present control routine is repeatedly performed at predetermined intervals by the processor 62 of the controller 6 of the first power supply apparatus 2a.

First, at step S201, the processor 62 judges whether it has received an instruction to increase the amount of power supply to a vehicle. If it is judged that it has received an instruction to increase the amount of power supply to a vehicle, the present control routine proceeds to step S202.

At step S202, the processor 62 increases the amount of power supply to a vehicle from the first power supply apparatus 2a over the initial value. For example, the processor 62 raises the value of voltage of the alternating current power supplied to the power transmission side resonance circuit 43 of the power transmission apparatus 4 by a predetermined amount. After step S202, the present control routine ends.

On the other hand, if at step S201 it is judged that it has not received an instruction to increase the amount of power supply to a vehicle, the present control routine proceeds to step S203. At step S203, the processor 62 judges whether it has received an instruction to initialize the amount of power supply to a vehicle. If it is judged that it has received an instruction to initialize the amount of power supply to a vehicle, the present control routine proceeds to step S204.

At step S204, the processor 62 initializes the amount of power supply to a vehicle from the first power supply apparatus 2a. That is, the processor 62 returns the amount of power supply to a vehicle from the first power supply apparatus 2a to the initial value. After step S204, the present control routine ends. On the other hand, if at step S203 it is judged that it has not received an instruction to initialize the amount of power supply to a vehicle, the present control routine ends.

Note that, the set time period determined in advance in accordance with the hours in which operation of internal combustion engines is prohibited or restricted in the engine limited operation area ELA may be stored in the memory 61 of the controller 6 etc., and the first power supply apparatus 2a may increase the amount of power supply to a vehicle when the set time period is started and initialize the amount of power supply to a vehicle when the set time period is ended. In this case, the server 8 is omitted or the server 8 transmits the set time period to the first power supply apparatus 2a through the communication network 9.

### <Third Embodiment>

The power supply system according to a third embodiment is basically similar to the power supply system according to the second embodiment except for the points explained below. For this reason, below, the third embodiment of the present invention will be explained focusing on parts different from the second embodiment.

If like in the second embodiment the engine limited operation area ELA is a limited time area, the time period in which operation of internal combustion engines is prohibited or restricted in the engine limited operation area ELA is limited. For this reason, the server 8 considers the hours in which operation of internal combustion engines is prohibited or restricted in the engine limited operation area ELA and transmits to the first power supply apparatus 2a an instruction to increase the amount of power supply to a vehicle when the current time is within the set time period.

However, if there are few vehicles passing through a first point at which the first power supply apparatus 2a is installed, there is little need for increasing the amount of power supply to a vehicle from the first power supply apparatus 2a. For this reason, in the third embodiment, the server 8 acquires the amount of traffic of vehicles at the first point, and when the current time is within a set time period and the amount of traffic of vehicles is equal to or greater than a predetermined value, the server 8 transmits to the first power supply apparatus 2a an instruction to increase the amount of power supply to a vehicle. By doing this, it is possible to more effectively supply power to a vehicle by non-contact from the first power supply apparatus 2a. Note that, the "amount of traffic of vehicles at the first point" means the number of vehicles passing through the first point during a predetermined time period.

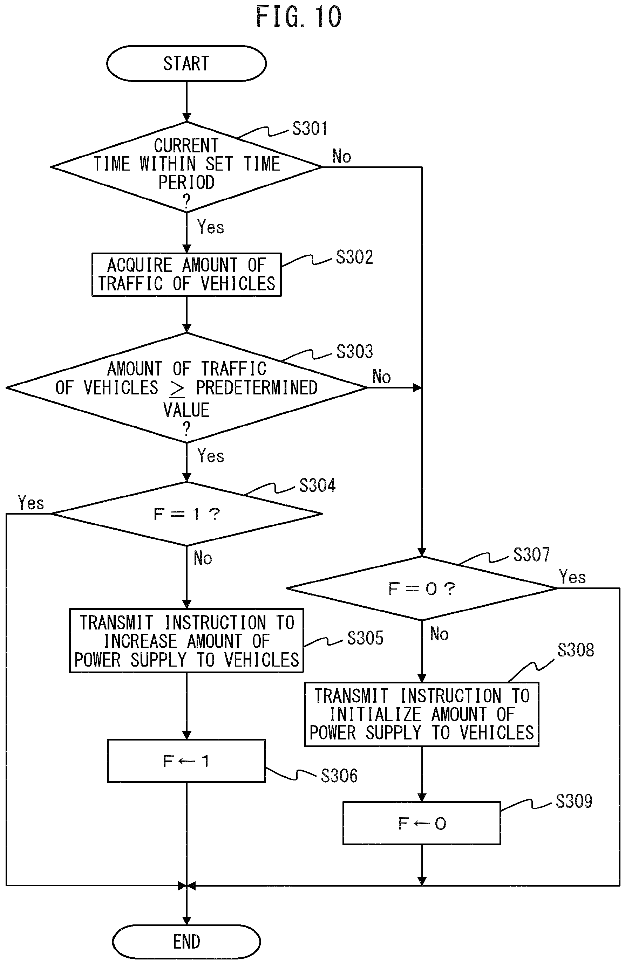

FIG. 10 is a flow chart showing a control routine performed at the server 8 in the third embodiment. The present control routine is repeatedly performed by the processor 84 of the server 8.

First, at step S301, in the same way as step S101 of FIG. 8, the processor 84 judges whether the current time is within a set time period. If it is judged that the current time is within a set time period, the present control routine proceeds to step S302.

First, at step S302, the processor 84 acquires the amount of traffic of vehicles at the first point. For example, a plurality of vehicles periodically transmit position information of the vehicles through the communication network 9 to the server 8. The processor 84 of the server 8 calculates the number of vehicles passing through the first point during a predetermined time period up to the current time based on the position information of the vehicles to thereby obtain the amount of traffic of vehicles at the first point. Note that, a metal detector, photoelectric sensor, camera, or road side device or other such device able to detect vehicles may be provided at the first point and the output of such a device may be transmitted to the server 8 instead of position information of the vehicles. Further, an operator of the server 8 etc. may input the amount of traffic of vehicles at the first point to the server 8, and the processor 84 may acquire the value input to the server 8 as the amount of traffic of vehicles at the first point. Further, the processor 84 may acquire the amount of traffic of vehicles at a first point from VICS^{®} information or other such road traffic information.

Next, at step S303 the processor 84 judges whether the amount of traffic of vehicles at the first point is equal to or greater than a predetermined value. The predetermined value, for example, is set to 10 vehicles per hour to 1000 vehicles per hour.

If at step S303 it is judged that the amount of traffic of vehicles at the first point is equal to or greater than the predetermined value, the present control routine proceeds to step S304. Steps S304 to S306 are performed in the same way as steps S102 to S104 of FIG. 8. That is, if the power supply flag F is set to zero, an instruction to increase the amount of power supply to a vehicle is transmitted to the first power supply apparatus 2a.

On the other hand, if at step S301 it is judged that the current time is other than the set time period or it is judged that the amount of traffic of vehicles at the first point is less than the predetermined value, the present control routine proceeds to step S306. Steps S306 to S308 are performed in the same way as steps S105 to S107 of FIG. 8. That is, when the power supply flag F is set to "1", an instruction to initialize the amount of power supply to a vehicle is transmitted to the first power supply apparatus 2a.

### <Other Embodiments>

Above, preferred embodiments according to the present invention were explained, but the present invention is not limited to these embodiments and can be corrected and changed within the language of the claims.

For example, the vehicle supplied with power by the power supply apparatuses 2a, 2b may be an electric vehicle (EV) not mounting an internal combustion engine. Further, the methods of non-contact power supply to vehicles from the power supply apparatuses 2a, 2b is not limited to an electromagnetic induction system such as magnetic field resonance coupling. Various methods such as an electrical field coupling system transmitting power using an electric field as a medium can be used.

### REFERENCE SIGNS LIST

1, 1'. power supply system
2. power supply apparatus
2a. first power supply apparatus
2b. second power supply apparatus
3. vehicle
30. internal combustion engine
ELA. engine limited operation area

## Claims

1. A power supply system (1, 1') comprising a plurality of power supply apparatuses (2) installed at a road at surroundings of an area in which operation of internal combustion engines (30) is prohibited or restricted and configured so as to transmit power to vehicles (3) by non-contact, wherein
the plurality of power supply apparatuses (2) include:
a first power supply apparatus (2a) installed at a first point where a distance of a running route up to an entrance of the area or a straight route up to the entrance or a boundary of the area is equal to or less than a predetermined distance; and
a second power supply apparatus (2b) installed at a second point where the distance is greater than the predetermined distance, and
an amount of power supply to a vehicle (3) from the first power supply apparatus (2a) is made greater than an amount of power supply to a vehicle (3) from the second power supply apparatus (2b).

2. The power supply system (1, 1') according to claim 1, wherein
the plurality of power supply apparatuses (2) include equal to or greater than three power supply apparatuses (2) installed at mutually different points, and
an amount of power supply to a vehicle (3) from each of the plurality of power supply apparatuses (2) is made greater the shorter the distance.

3. The power supply system (1, 1') according to claim 1 or 2, wherein
the area is a limited time area where operation of internal combustion engines (30) is prohibited or restricted in predetermined hours, and
the first power supply apparatus (2a) makes an amount of power supply to a vehicle (3) in a predetermined set time period including at least a part of the hours greater than an amount of power supply to a vehicle (3) in a time period other than the set time period.

4. The power supply system (1, 1') according to claim 3, wherein a start point of the set time period is set to a point before the hours.

5. The power supply system (1') according to claim 3 or 4, further comprising a server (8) able to communicate with the first power supply apparatus (2a), wherein
the first power supply apparatus (2a) increases an amount of power supply to a vehicle (3) based on an instruction from the server (8).

6. The power supply system (1') according to claim 5, wherein the server (8) acquires an amount of traffic of vehicles (3) at the first point and transmits an instruction to increase an amount of power supply to a vehicle (3) from the first power supply apparatus (2a) when a current time is within the set time period and the amount of traffic is equal to or greater than a predetermined value.

7. A power supply method using a plurality of power supply apparatuses (2) installed at a road at surroundings of an area in which operation of internal combustion engines (30) is prohibited or restricted and configured so as to transmit power to vehicles (3) by non-contact, wherein
the plurality of power supply apparatuses (2) include:
a first power supply apparatus (2a) installed at a first point where a distance of a running route up to an entrance of the area or a straight route up to the entrance or a boundary of the area is equal to or less than a predetermined distance; and
a second power supply apparatus (2b) installed at a second point where the distance is greater than the predetermined distance, and
an amount of power supply to a vehicle (3) from the first power supply apparatus (2a) is made greater than an amount of power supply to a vehicle (3) from the second power supply apparatus (2b).

8. A power supply apparatus (2) installed at surroundings of an area in which operation of internal combustion engines (30) is prohibited or restricted in predetermined hours, wherein
an amount of power supply to a vehicle (3) in a predetermined set time period including at least a part of the hours is made greater than an amount of power supply to a vehicle (3) in a time period other than the set time period.
